# EUROPÄISCHE PATENTANMELDUNG

(11) **EP 0 998 847 A1**
(43) Veröffentlichungstag der Anmeldung: **10.05.2000**
(21) Anmeldenummer: 98120782.2
(22) Anmeldetag: 02.11.1998
(51) Int. Cl.: A01G 17/02

(54) **Elektro-hydraulisches Armführungssystem mit vollautomatischen Entlaubungsköpfen**

(71) Anmelder: Avidor SA, 1029 Villars-Ste-Croix (CH)
(72) Erfinder: Ducret, Jean-Luc, 1029 Villars-Ste-Croix (CH)

(57) **Zusammenfassung**

Das elektro-hydraulische Armführungssystem mit mobilen Entlaubungsköpfen basiert auf dem Parallelogramm-Prinzip (1) und besteht aus vier Gelenkverbindungen. Der Kopf ist mit einem elektrischen Kontaktgeber (7), einer freilaufenden Rolle aus PVC oder Schaumgummi (6), Schermessern (3), einem Hydraulikmotor (4) und dessen Inox-Abdeckung (8), einem Blattansauggehäuse (9) und Pneumatisch- oder Gaszylinder (2) ausgestattet. Diese Konzeption aller Teile gewährleisten eine einwandfreie Platzierung des Arbeitskopfes im Zusammenhang mit der Unregelmässigkeit der Laubwand. Die vollautomatischen Köpfe erlauben eine gleichmässige Entlaubung, auch unter schwersten Bedingungen.

## Beschreibung

Entblätterungs-Maschinen werden fast ausschliesslich im Weinbau eingesetzt. Sie dienen zur mechanischen Entlaubung der Traubenzone in der Blätterwand. Die Vorteile sind vielfälltig, wie eine bessere natürliche Belüftung nach längeren Feuchtigkeitsperioden, bessere Traubenqualität, Zeitgewinn bei der manuellen Traubenernte, höherer Zuckergehalt, bessere Farbstoffwerte etc. Der Nachteil ist die genaue Abtastung der Laubwand in unregelmässigen Gassenbreiten. Bisher konnte der Kopf nur Gassenbreiten von +/- 30 cm genau abtasten. Bei breiten Weingartengassen ist dies ein Problem, da der Traktor unmöglich immer in der Gassenmitte fahren kann. Die Folgen sind, dass der Entlaubungskopf auf der einten Seite der Gasse nicht mehr auf der Laubwand anliegt (keine Entlaubung mehr) und auf der anderen Seite der Kop in die Laubwand hineintretet und somit die Trauben zerdrückt oder abschneidet.

### Technische Aufgabe

Gegenstand der Erfindung soll ein System sein, dass eine einwandfreie Abtastung der Unregelmässigkeiten der Laubwand sowie der verschiedenen Gassenbreiten zwischen 1.23 - 3.56 m automatisch und ohne Intervention einer Person ausführt.

Erfindungsgemäss wird beim elektro-hydraulisches Armführungssystem mit vollautomatischen Entlaubungsköpfen erreicht, dass die Köpfe immer auf der Laubwand anliegen, egal welche Gassenbreite. Die Köpfe sind mit elektrischen Kontaktgebern ausgestattet, welche bei maximalem bzw. minimalem Anliegedruck einen elektrischen Impuls auslösen, dadurch wir die Arbeitsposition des Kopfes sofort korrigiert. Dies ermöglicht eine einwandfreie Arbeit in allen Gassenbreiten, da sie die ganzen Arbeitsbreiten automatisch, individuell links wie rechts abdecken können.

## Patentansprüche

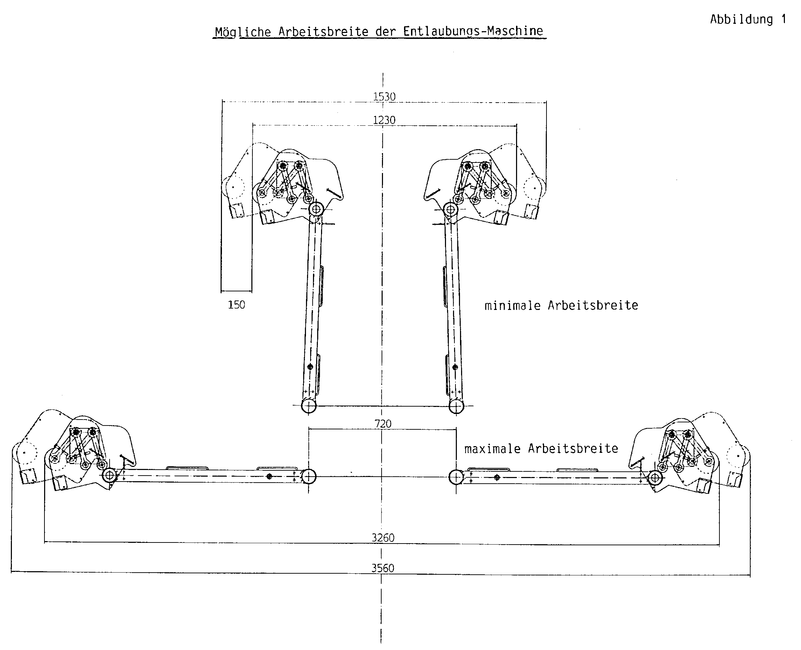

1. Im Anschluss wird die Erfindung anhand eines Beispiels und mit Bezug auf die beiliegenden Zeichnungen näher erläutert, wobei in
**Abbildung 1** den genauen Abtastungs-Radius des Kopfes von 1.23 bis 3.56 m darstellt. Die Köpfe können sich unabhängig von einander ausfahren.

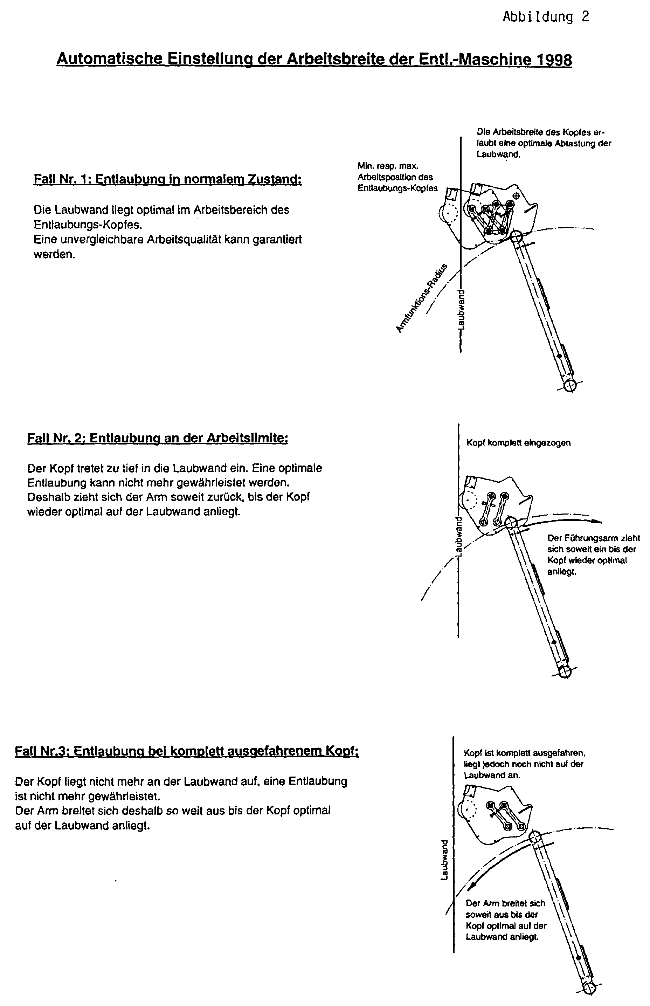

**Abbildung 2** veranschaulicht die Abtastungs-Situationen.
**Skizze 1** wird der optimale Einsatz gezeigt, d.h. der Kopf tastet sich mit seinen 15 cm Arbeitsspielraum komplett selbständig der Unregelmässigkeit der Laub-wand entlang.
**Skizze 2** zeigt die Situation bei einem volleingezogenen Arbeitskopf. Jetzt löst der elektrische Kontaktgeber den Impuls für den Einzug des Führungsarmes, aus. Der Einzug wird sofort unterbrochen sobald der Kopf wieder optimal arbeiten kann.
**Skizze 3** zeigt den vollausgefahrenen Arbeitskopf welcher nicht mehr auf der Laubwand anliegt. Sofort löst der elektrische Kontaktgeber einen Impuls für die Ausbreitung des Führungsarmes, aus. Die Ausbreitung wird unter brochen sobald der Kopf wieder optimal arbeiten kann.

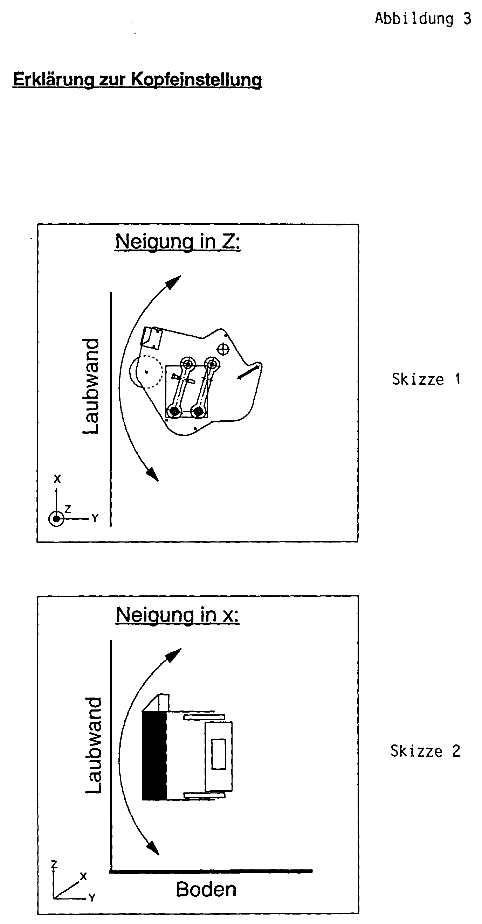

**Abbildung 3** veranschaulicht die Einstellungen des Kopfes im Zusammenhang mit der Laubwand.
**Skizze 1** zeigt die Möglichkeit den Kopf in der Z-Achse zu drehen. Die Einstellung ermöglicht die Annäherung resp. Entfernung der Messer zur Laubwand und deren Trauben. Die Arbeitsintensität kann genau bestimmt werden.
**Skizze 2** zeigt die Einstellung des Kopfes in der X-Achse. Die Kopfauflage kann dem Weingarten-Erziehungssystem genau angepasst werden.

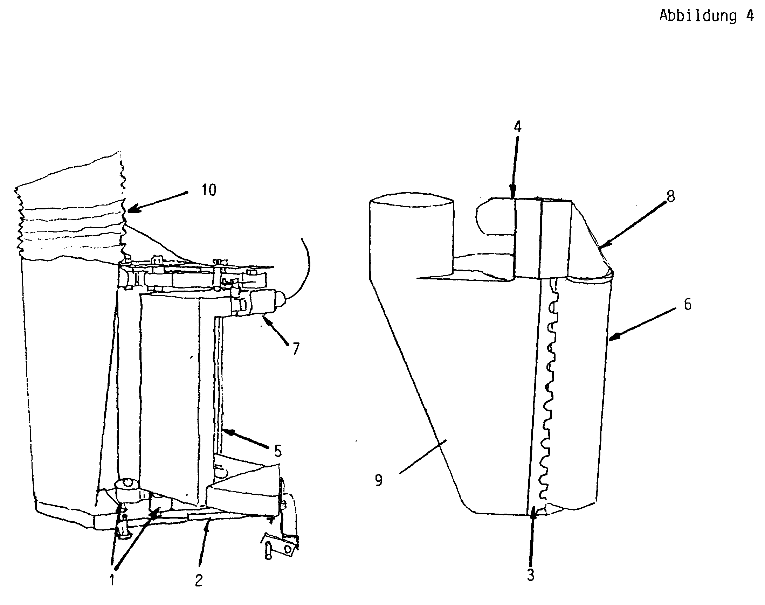

**Abbildung 4** zeigt den eigentlichen Entlaubungskopf. Er ist auf einer Parallelogramm-Vorrichtung (1) montiert und dadurch mobil. Dank Gas- (2), Pneumatisch- und Hydraulikzylindern lässt sich der Anliegedruck, sowie die Intensität der Schermesser (3) resp. den Enlaubungsgrad regulieren. Die Messer werden mittels eines Hydraulikmotors (4) angetrieben. Die Laubwand gleitet über eine Inox-Abdeckung (5) bis zu einer freilaufenden Rolle (6), welche aus PVC oder Schaumgummi besteht. Diese hebt die Trauben sorgfälltig über die Messer, so dass weder Beschädigungen noch Verletzungen auftreten. Der elektrische Kontaktgeber (7) dirigiert den Führungsarm so präzise damit eine gleichmässige Entlaubung durch den Kopf jederzeit gewährleistet ist. Die Inox-Messer-gehäuseabdeckung (8) schützt den Hydraulikmotor vor Beschädigungen durch fremde Gegenstände in der Laubwand. Das Absauggehäuse (9) mündet schliesslich in einen flexiblen Schlauch (10) welcher die angesogenen resp. abgeschnittenen Blattfetzen wegsaugt.
